# EUROPÄISCHE PATENTSCHRIFT

(11) **EP 2 352 947 B1**
(45) Veröffentlichungstag und Bekanntmachung des Hinweises auf die Patenterteilung: **19.09.2012**
(21) Anmeldenummer: 09759927.8
(22) Anmeldetag: 18.11.2009
(51) Int. Cl.: F16N 19/00, F16H 57/04

(54) **VERFAHREN ZUR DYNAMISCHEN ÖLBEFÜLLUNG EINES GETRIEBES FÜR KRAFTFAHRZEUGE UND VORRICHTUNG ZUR DURCHFÜHRUNG DES VERFAHRENS**
METHOD FOR THE DYNAMIC OIL FILLING OF A TRANSMISSION FOR MOTOR VEHICLES, AND DEVICE FOR CARRYING OUT THE METHOD
PROCÉDÉ DE REMPLISSAGE D'HUILE DYNAMIQUE D'UNE BOÎTE DE VITESSES POUR VÉHICULES À MOTEUR, ET DISPOSITIF POUR LA MISE EN OEUVRE DE CE PROCÉDÉ

(30) Priorität: 01.12.2008 DE 102008044206
(43) Veröffentlichungstag der Anmeldung: 10.08.2011
(73) Patentinhaber: ZF Friedrichshafen AG, 88038 Friedrichshafen (DE)
(72) Erfinder: WILHELM, Malte, 66333 Völklingen (DE); KIRST, Christoph, 66787 Wadgassen (DE); THOMMET, Laurent, F-57520 Grosbliederstroff (FR)
(86) Internationale Anmeldenummer: PCT/EP2009/065349
(87) Internationale Veröffentlichungsnummer: WO 2010/063573

(56) Entgegenhaltungen:
- DE-A1- 10 149 134
- US-A- 5 282 386
- US-A- 6 068 029

## Beschreibung

Die Erfindung betrifft ein Verfahren zur dynamischen Ölbefüllung eines Getriebes für Kraftfahrzeuge nach dem Oberbegriff des Patentanspruches 1, bekannt durch die DE 101 49 134 A1 der Anmelderin, sowie eine Vorrichtung zur Durchführung des Verfahrens nach dem Oberbegriff des Patentanspruches 3.

Durch die DE 101 49 134 A1 der Anmelderin wurde ein Verfahren zur dynamischen Ölbefüllung und Ölstandseinstellung bei einem Getriebe, insbesondere einem Automatgetriebe für Kraftfahrzeuge bekannt. Die Ölbefüllung wird bei laufendem Getriebe auf einem Prüfstand durchgeführt, wobei zunächst eine Erstbefüllung des Getriebes mit einer Grundmenge von Getriebeöl (ATF) erfolgt. Anschließend wird über eine Ölüberlaufbohrung am Getriebe überschüssiges Öl abgesaugt und gleichzeitig frisches Öl nachdosiert. Anschließend erfolgt eine Endöleinstellung durch einmaliges Nachdosieren. Danach wird die Ölüberlaufbohrung am Getriebe geschlossen. Anschließend wird unter Berücksichtigung der Öltemperatur, eines Faktors zur Definition von fahrzeugseitigen Ölkühlervarianten und des Einbauwinkels des Getriebes im Fahrzeug eine so genannte Offsetmenge, im Folgenden auch als Ausgleichsmenge bezeichnet, berechnet und über eine Öffnung im Getriebegehäuse, vorzugsweise über einen Getriebeölkühleranschluss nachdosiert, welcher danach temporär, z. B. über einen öllöslichen Fettstopfen verschlossen wird.

Ein Problem ergibt sich dann, wenn die Berechnung der Offsetmenge einen negativen Wert ergibt, d. h. wenn das Getriebe überfüllt ist. Diese Situation kann dann eintreten, wenn das Getriebe geneigt im Fahrzeug eingebaut wird und der Ölspiegel in Einbaulage ansteigen würde. In diesem Fall wäre dem horizontal auf dem Prüfstand ausgerichteten Getriebe die Ausgleichsmenge zu entnehmen. Da das Getriebe aufgrund des dynamischen Befüllverfahrens noch läuft, z. B. mit Leerlaufdrehzahl und die Ölüberlaufbohrung bereits verschlossen ist, bereitet die genau dosierte Entnahme einer Ausgleichsmenge Schwierigkeiten oder erfordert zusätzliche Maßnahmen, die das Befüllungsverfahren komplizieren.

Es ist Aufgabe der vorliegenden Erfindung, bei einem Verfahren der eingangs genannten Art die Entnahme einer negativen Ausgleichsmenge zu ermöglichen, wobei die Entnahme möglichst genau und öltemperaturkorrigiert erfolgen soll. Es ist ferner Aufgabe der Erfindung, eine kostengünstige Vorrichtung zu schaffen, welche eine zuverlässige Durchführung des Verfahrens erlaubt.

Die Aufgabe der Erfindung wird durch die Merkmale der unabhängigen Ansprüche 1 und 3 gelöst. Vorteilhafte Ausgestaltungen ergeben sich aus den Unteransprüchen.

Erfindungsgemäß ist vorgesehen, dass im Falle einer negativen Ausgleichsmenge, d. h. bei Überfüllung des Getriebes nach der Endöleinstellung die Ausgleichsmenge entnommen wird, und zwar bei laufendem und horizontal ausgerichtetem Getriebe. Die negative Ausgleichsmenge kann somit dynamisch entnommen werden, ohne dass das Getriebe auf dem Prüfstand verschwenkt werden muss, beispielsweise in die Einbaulage im Fahrzeug.

Nach einer bevorzugten Verfahrensvariante wird die negative Ausgleichsmenge abgepumpt, gemessen und als Ölvolumen aufgefangen. Das Abpumpen erfolgt vorteilhaft über die Getriebeölpumpe, d. h. die zu entnehmende Ausgleichsmenge steht unter Druck, beispielsweise 2 bar. Daraus ergibt sich der Vorteil einer genauen Messung der Ausgleichsmenge, da ― anders als beim Absaugen ― keine Entgasung (Austritt von Luft aus dem Öl) auftritt.

Ferner ist erfindungsgemäß bei einer Vorrichtung zur Durchführung des Verfahrens eine Messzylinder-Kolben-Einheit mit einem Arbeitsvolumen oder Hubraum vorgesehen, welcher der zu erwartenden negativen Ausgleichsmenge entspricht. Damit wird der Vorteil erreicht, dass die zu entnehmende Ausgleichsmenge präzise gemessen, aufgefangen und gespeichert werden kann. Sie kann einem anderen Getriebe auch als positive Ausgleichsmenge wieder zugeführt werden.

Nach einer bevorzugten Ausführungsform ist die Messzylinder-Kolben-Einheit in eine Kurzschlussleitung, welche die Ölkühleranschlüsse des Getriebes verbindet, schaltbar. Damit wird der Vorteil erreicht, dass die Entnahme der negativen Ausgleichsmenge dynamisch, d. h. bei laufendem Getriebe durchgeführt werden kann.

In weiterer vorteilhafter Ausgestaltung weist der Messzylinder eine Ölzulaufund eine Ölablauföffnung, so genannte Zylinderanschlüsse auf, welche mit den Getriebeölkühleranschlüssen verbunden sind, d. h. die Kurzschlussleitung verläuft durch den Messzylinder, jedoch ohne ein Totvolumen. Vorteilhaft ist ferner, dass über den Kurzschluss die Öltemperatur des Öls gemessen und somit bei der Berechnung der Ausgleichsmenge berücksichtigt werden kann.

Nach einer weiteren bevorzugten Ausführungsform sind der Kolben der Messzylinder-Kolben-Einheit elektromotorisch, insbesondere elektromechanisch verstellbar und der Kolbenweg über eine Messeinrichtung messbar. Durch die kontrollierte Bewegung des Kolbens ist eine genaue Messung und Aufnahme der negativen Ausgleichsmenge im Messzylinder sichergestellt.

Nach einer weiteren bevorzugten Ausführungsform ist die im Kurzschluss zwischen den Ölkühleranschlüssen angeordnete Messzylinder-Kolben-Einheit integraler Bestandteil einer Befüll- und Prüfeinrichtung für Seriengetriebe. Damit wird der Vorteil erreicht, dass das Getriebe, insbesondere ein Automatgetriebe einerseits bis zur Endöleinstellung und andererseits bis zum Nachfüllen einer positiven Ausgleichsmenge oder zur Entnahme einer negativen Ausgleichsmenge auf derselben Einrichtung ordnungsgemäß befüllt und transportfertig verschlossen werden kann. Ein weiterer Vorteil des im Kurzschluss angeordneten Messzylinders besteht darin, dass eine Schnellbefüllung des Getriebes mit einer positiven Ausgleichsmenge möglich ist, wenn sich bereits ein Ölvolumen im Messzylinder befindet, z. B. nach Entnahme einer negativen Ausgleichsmenge.

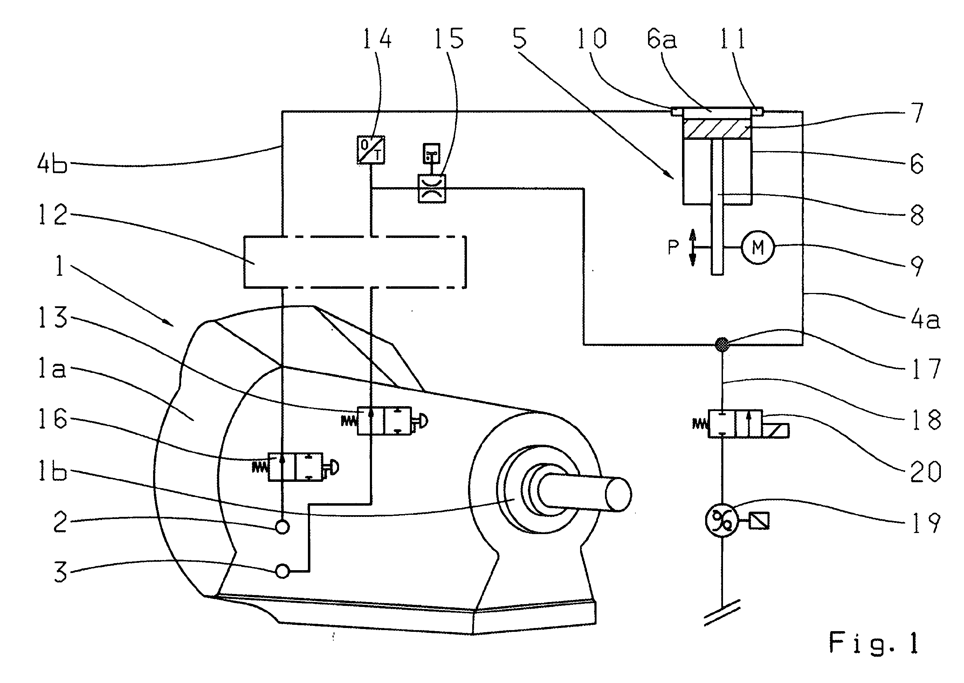

Ein Ausführungsbeispiel der Erfindung ist in der Zeichnung dargestellt und wird im Folgenden näher beschrieben, wobei sich weitere Merkmale und/oder Vorteile aus der Beschreibung und/oder der Zeichnung ergeben können.

Die einzige Figur zeigt ein Automatgetriebe 1, welches zur Befüllung mit Getriebeöl, so genanntes ATF (Automatic Transmission Fluid) auf einer nicht dargestellten Befüll- und Prüfeinrichtung horizontal angeordnet ist. Das Automatgetriebe 1 umfasst einen nicht dargerstellten Wandler, weicher sich innerhalb einer angedeuteten Wandlerglocke 1 a, d. h. auf der Eingangsseite des Getriebes 1 befindet, und eine Abtriebsseite mit einem Abtriebsflansch 1 b. Im Gehäuse des Getriebes 1 sind zwei Ölkühleranschlüsse 2, 3 angeordnet, welche für den Vorlauf und den Rücklauf eines nicht dargestellten Getriebeölkühlers vorgesehen sind. Der Getriebeölkühler ist in der Regel im vorderen Motorraum des Fahrzeuges im Bereich eines Kühlmoduls angeordnet und durch nicht dargestellte Leitungen mit dem Getriebegehäuse verbunden.

Das Getriebe 1 wird zunächst nach einem durch die DE 101 49 134 A1 der Anmelderin bekannten Verfahren befüllt, welches hier nicht detailliert erläutert und dargestellt ist. Vielmehr wird auf die DE 101 49 134 A1 verwiesen, deren Inhalt voll umfänglich in den Offenbarungsgehalt dieser Anmeldung mit einbezogen wird. Die Ölbefüllung verläuft nach dem bekannten Verfahren bis zur so genannten Endöleinstellung, wonach eine nicht dargestellte Ölüberlaufbohrung am Getriebegehäuse verschlossen wird. Danach wird eine so genannte Offsetmenge, im Folgenden Ausgleichsmenge genannt, berechnet, bei welcher die Öltemperatur, eine fahrzeugseitige Ölkühlervariante und der Einbauwinkel des Getriebes im Fahrzeug eingehen. Aus der Berechnung ergibt sich eine positive oder eine negative Ausgleichsmenge. Eine positive Ausgleichsmenge bedeutet, dass Öl nachgefüllt werden muss, wobei sich das Volumen des nachzufüllenden Öls unter anderem aus dem Ölvolumen des fahrzeugseitigen Getriebeölkühlers und der Verbindungsleitungen zum Getriebe ergibt. Darüber hinaus kann der Einbauwinkel des Getriebes im Fahrzeug ausschlaggebend für eine positive Ausgleichsmenge sein (je nach Neigung). Das Nachfüllen einer positiven Ausgleichsmenge (Offsetmenge) ist in der vorgenannten Patentanmeldung der Anmelderin beschrieben, es heißt dort sinngemäß: die berechnete Offsetmenge wird bevorzugterweise über den Getriebeölkühleranschluss nachdosiert.

Wie eingangs erwähnt kann jedoch auch der Fall eintreten, dass die Berechnung einen negativen Wert für die Ausgleichsmenge ergibt - dies bedeutet, dass das Getriebe 1 überfüllt ist, d. h. dem eingefüllten Ölvolumen muss die negative Ausgleichsmenge entnommen werden. Dies erfolgt nach dem erfindungsgemäßen Verfahren mit der erfindungsgemäßen Vorrichtung, welche im Folgenden erläutert werden. Die beiden Getriebeölkühleranschlüsse 2, 3, im Folgenden kurz Ölkühleranschlüsse oder Anschlüsse 2, 3 genannt, sind mit einer Kurzschlussleitung 4, auch Kurzschluss 4 genannt, verbunden, wobei im Kurzschluss 4 eine Messzylinder-Kolben-Einheit 5 angeordnet ist. Letztere umfasst einen Messzylinder 6, einen Kolben 7, eine Kolbenstange 8 sowie einen schematisch dargestellten elektromechanischen Stellantrieb 9 für die Kolbenstange 8, deren Bewegungsrichtungen durch einen Doppelpfeil P angedeutet sind. Im Bereich der Stirnfläche des Messzylinders 6 sind Zylinderanschlüsse 10, 11 angeordnet, über welche das Innere des Zylinders 6, das Arbeitsvolumen 6a, mit dem Kurzschluss 4 verbunden ist. Die Kurzschlussleitung 4 läuft, was nicht im Einzelnen dargestellt ist, ohne ein Totvolumen zu bilden und ohne einen nennenswerten Druckabfall zu verursachen, durch den Messzylinder 6 hindurch. Der Messzylinder 6 ist somit bei Anschlag des Kolbens 7, d. h. Hubvolumen gleich Null, ein verlustarmer Teil der Kurzschlussleitung 4. Der zwischen dem Ölkühleranschluss 3 und dem Zylinderanschluss 11 gelegene Teil der Kurzschlussleitung 4 wird als Vorlauf 4a bezeichnet, der zwischen dem Zylinderanschluss 10 und dem Ölkühleranschluss 2 gelegene Teil der Kurzschlussleitung 4 wird als Rücklauf 4b bezeichnet. Zwischen Vorlauf 4a und Rücklauf 4b ist eine so genannte Mehrfachkupplung 12 angedeutet, über welche das Getriebe 1 durch weitere nicht dargestellte Leitungen mit dem ebenfalls nicht dargestellten Prüfstand verbunden ist. Im Vorlauf 4a sind ein Absperrventil 13, ein Druckaufnehmer 14 sowie ein Durchflusssensor 15 angeordnet; im Rücklauf 4b ist ein Absperrventil 16 angeordnet. Der Vorlauf 4a ist über einen Einspeisungspunkt 17 mit einer Zuflussleitung 18 verbunden, über welche Frischöl in den Kurzschluss 4 gepumpt werden kann. In der Zuflussleitung 18, welche mit einem nicht dargestellten Frischölreservoir verbunden ist, sind eine Messuhr 19 zur Messung der Durchflussmenge sowie ein Absperrventil 20 angeordnet.

Die erfindungsgemäße Vorrichtung, wie oben beschrieben, arbeitet wie folgt: Liefert die Berechnung der Ausgleichsmenge einen positiven Wert, so ist eine Ölmenge nachzufüllen, was über die Versorgungsleitung 18, einen Teil des Vorlaufes 4a und den Rücklauf 4b, bei geöffneten Absperrventil 16 bis zum Ölkühleranschluss 2 erfolgt. Der Kolben 7 befindet sich beim Befüllen des Getriebes 1 mit einer positiven Ausgleichsmenge in der Nulllage (Hub gleich Null), wobei das Frischöl vom Zylinderanschluss 11 ohne signifikanten Druckabfall durch den Zylinder 6 bis zum Zylinderanschluss 10 strömt. Entgegen der Darstellung in der Figur ist das Absperrventil 20 geöffnet, die Messuhr 19 kontrolliert die Durchflussmenge und schaltet automatisch nach Befüllung der berechneten Ausgleichsmenge ab.

Liegt als Ergebnis der Berechnung ein negativer Wert für die Ausgleichsmenge vor, so ist dieses Ölvolumen dem Getriebe 1 zu entnehmen, was über den Ölkühleranschluss 3 und den daran angeschlossenen Vorlauf 4a in den Messzylinder 6 erfolgt. Zu Beginn des Entnahmevorganges bzw. des Befüllvorganges des Messzylinders 6 befindet sich der Kolben 7 in Nullstellung, d. h. das Arbeitsvolumen 6a ist gleich Null. Das Absperrventil 13 ist ― wie dargestellt ― auf Durchfluss gestellt. Druck-und Durchflussmenge werden über den Druckaufnehmer 14 bzw. dem Durchflusssensor 15 erfasst. Das dem Ölkühleranschluss 3 zu entnehmende Öl, welches durch eine im Getriebe 1 angeordnete, etwa mit Leerlaufdrehzahl laufende Getriebeölpumpe abgepumpt wird, steht unter einem Druck von etwa 2 bar. Dies ist für den Befüllvorgang des Messzylinders 6 notwendig, um eine kontrollierte und entgasungsfreie Befüllung des Messzylinders 6 zu erreichen. Das über den Vorlauf 4a zuströmende Öl tritt über den Zylinderanschluss 11 in das Arbeitsvolumen 6a des Zylinders 6 ein, wobei der Kolben 7 kontrolliert über den elektromechanischen Stellantrieb 9 im Sinne einer Vergrößerung des Arbeitsvolumens 6a verstellt wird. Der Weg der Kolbenstange 8 bzw. der Hub des Kolbens 7 wird durch eine nicht dargestellte Messeinrichtung erfasst. Befindet sich die berechnete negative Ausgleichsmenge innerhalb des Messzylinders 6, wird der Kolben 7 angehalten, die Entnahme ist damit beendet. Abschließend werden die Ölkühleranschlüsse 2, 3 für den Transport des Getriebes 1 verschlossen, was vorzugsweise durch öllösliche Fettstopfen erfolgt. Das Getriebe 1 ist damit ordnungsgemäß mit Öl befüllt und kann zum Fahrzeug transportiert werden.

### Bezugszeichen

- 1: Automatgetriebe
- 1a: Wandlerglocke
- 1b: Abtriebsflansch
- 2: Ölkühleranschluss
- 3: Ölkühleranschluss
- 4: Kurzschlussleitung
- 4a: Vorlauf
- 4b: Rücklauf
- 5: Messzylinder-Kolben-Einheit
- 6: Messzylinder
- 6a: Arbeitsvolumen
- 7: Kolben
- 8: Kolbenstange
- 9: elektromechanischer Stellantrieb
- 10: Zylinderanschluss
- 11: Zylinderanschluss
- 12: Mehrfachkupplung
- 13: Absperrventil
- 14: Druckaufnehmer
- 15: Durchflusssensor
- 16: Absperrventil
- 17: Einspeisungspunkt
- 18: Zuflussleitung
- 19: Messuhr
- 20: Absperrventil

- P: Kolbenhub

## Patentansprüche

1. Verfahren zur dynamischen Ölbefüllung eines eine Ölüberlaufbohrung sowie Ölkühleranschlüsse (2, 3) aufweisenden Getriebes (1) für Kraftfahrzeuge, insbesondere eines Automatgetriebes, wobei folgende Verfahrensschritte durchgeführt werden: a) eine Erstölbefüllung des Getriebes (1) mit einer Grundölmenge, b) Absaugen von überschüssigem Öl und gleichzeitiges Nachdosieren, c) Endöleinstellung durch einmaliges Nachdosieren, d) Verschließen der Ölüberlaufbohrung, e) Berechnen und Nachdosieren einer Ausgleichsmenge, insbesondere für fahrzeugspezifische Komponenten, **dadurch gekennzeichnet, dass** für den Fall, dass als Ergebnis der Berechnung ein negativer Wert für die Ausgleichsmenge vorliegt, die berechnete Ausgleichsmenge der bereits eingefüllten Ölmenge bei laufendem Getriebe entnommen wird.

2. Verfahren nach Anspruch 1, **dadurch gekennzeichnet, dass** die negative Ausgleichsmenge abgepumpt, gemessen und als Volumen aufgefangen wird.

3. Vorrichtung zur Durchführung des Verfahrens nach Anspruch 1 oder 2, **gekennzeichnet durch** eine Messzylinder-Kolben-Einheit (5) mit einem Arbeitsvolumen (6a), welches der Ausgleichsmenge entspricht.

4. Vorrichtung nach Anspruch 3, **dadurch gekennzeichnet, dass** die Messzylinder-Kolben-Einheit (5) in eine Kurzschlussleitung (4), welche die Ölkühleranschlüsse (2, 3) verbindet, schaltbar ist.

5. Vorrichtung nach Anspruch 4, **dadurch gekennzeichnet, dass** der Messzylinder (6) Zylinderanschlüsse (10, 11) aufweist, welche über die Kurzschlussleitung (4, 4a, 4b) mit den Ölkühleranschlüssen (2, 3) verbunden sind.

6. Vorrichtung nach Anspruch 5, **dadurch gekennzeichnet, dass** die Kurzschlussleitung (4) totvolumenarm durch den Messzylinder (6) verläuft.

7. Vorrichtung nach einem der Ansprüche 3 bis 6, **dadurch gekennzeichnet, dass** der Kolben (7) der Messzylinder-Kolben-Einheit (5) elektromotorisch, vorzugsweise elektromechanisch verstellbar und der Kolbenweg über eine Messeinrichtung messbar sind.

8. Vorrichtung nach einem der Ansprüche 3 bis 7, **dadurch gekennzeichnet, dass** die Messzylinder-Kolben-Einheit (5) sowie der Kurzschluss (4) integrierter Bestandteil einer Befüll- und Prüfeinrichtung für das Getriebe (1) sind.

## Claims

1. Method for the dynamic oil filling of a transmission (1), which has an oil overflow bore and oil cooler ports (2, 3), for motor vehicles, in particular of an automatic transmission, wherein the following method steps are performed: a) an initial oil filling of the transmission (1) with a basic oil quantity, b) suctioning out of excess oil and simultaneous replenishment, c) final oil setting by one-off replenishment, d) closure of the oil overflow bore, e) calculation and replenishment of a compensation quantity, in particular for vehicle-specific components, **characterized in that**, if the result of the calculation is a negative value for the compensation quantity, the calculated compensation quantity is extracted from the already-filled oil quantity while the transmission is running.

2. Method according to Claim 1, **characterized in that** the negative compensation quantity is pumped out, measured and captured as a volume.

3. Device for carrying out the method according to Claim 1 or 2, **characterized by** a measurement cylinder-piston unit (5) with a working volume (6a) which corresponds to the compensation quantity.

4. Device according to Claim 3, **characterized in that** the measurement cylinder-piston unit (5) can be switched into a short-circuit line (4) which connects the oil cooler ports (2, 3).

5. Device according to Claim 4, **characterized in that** the measurement cylinder (6) has cylinder ports (10, 11) which are connected via the short-circuit line (4, 4a, 4b) to the oil cooler ports (2, 3).

6. Device according to Claim 5, **characterized in that** the short-circuit line (4) runs, with a small dead volume, through the measurement cylinder (6).

7. Device according to one of Claims 3 to 6, **characterized in that** the piston (7) of the measurement cylinder-piston unit (5) can be adjusted electromotively, preferably electromechanically, and the piston travel can be measured by means of a measurement device.

8. Device according to one of Claims 3 to 7, **characterized in that** the measurement cylinder-piston unit (5) and the short circuit (4) are integral constituent parts of a filling and testing device for the transmission (1).

## Revendications

1. Dispositif pour le remplissage d'huile dynamique d'une transmission (1) pour véhicules automobiles présentant un alésage de trop-plein d'huile ainsi que des raccords de refroidisseur d'huile (2, 3), en particulier d'une transmission automatique, dans lequel les étapes de procédé suivantes sont mises en oeuvre : a) un premier remplissage d'huile de la transmission (1) avec une quantité d'huile de base, b) une aspiration de l'huile en excès et un redosage simultané, c) un ajustement final d'huile par un redosage unique, d) une fermeture de l'alésage de trop-plein d'huile, e) un calcul et un redosage d'une quantité de compensation, en particulier pour des composants spécifiques au véhicule, **caractérisé en ce qu'**au cas où le résultat du calcul donne une valeur négative pour la quantité de compensation, la quantité de compensation calculée est enlevée de la quantité d'huile déjà versée, pendant le fonctionnement de la transmission.

2. Procédé selon la revendication 1, **caractérisé en ce que** la quantité de compensation négative est évacuée par pompage, mesurée et collectée sous forme de volume.

3. Dispositif pour mettre en oeuvre le procédé selon la revendication 1 ou 2, **caractérisé par** une unité cylindre-piston (5) avec un volume de travail (6a) qui correspond à la quantité de compensation.

4. Dispositif selon la revendication 3, **caractérisé en ce que** l'unité cylindre-piston (5) peut être commutée dans une conduite de court-circuit (4) qui relie les raccords de refroidisseur d'huile (2, 3).

5. Dispositif selon la revendication 4, **caractérisé en ce que** le cylindre de mesure (6) présente des raccords de cylindre (10, 11) qui sont reliés par le biais de la conduite de court-circuit (4, 4a, 4b) aux raccords de refroidisseur d'huile (2, 3).

6. Dispositif selon la revendication 5, **caractérisé en ce que** la conduite de court-circuit (4) s'étend à travers le cylindre de mesure (6) avec un faible volume mort.

7. Dispositif selon l'une quelconque des revendications 3 à 6, **caractérisé en ce que** le piston (7) de l'unité cylindre-piston (5) peut être réglé par moteur électrique, de préférence par voie électromécanique, et la course du piston peut être mesurée par le biais d'un dispositif de mesure.

8. Dispositif selon l'une quelconque des revendications 3 à 7, **caractérisé en ce que** l'unité cylindre-piston (5) ainsi que le court-circuit (4) font partie intégrante d'un dispositif de remplissage et de contrôle pour la transmission (1).
